# EUROPEAN PATENT SPECIFICATION

(11) **EP 3 655 149 B1**
(45) Date of publication and mention of the grant of the patent: **10.04.2024**
(21) Application number: 18834743.9
(22) Date of filing: 17.07.2018
(51) Int. Cl.: B01J 2/28, C05D 1/00, C05G 3/00, C05D 5/00, C05G 5/12

(54) **GRANULATED POLYHALITE AND POTASH MIXTURE AND A PROCESS FOR THE PRODUCTION THEREOF**
GRANULIERTES POLYHALIT- UND POTTASCHEGEMISCH UND VERFAHREN ZU DESSEN HERSTELLUNG
MÉLANGE GRANULÉ DE POLYHALITE ET DE POTASSE ET UN PROCESSUS DE PRODUCTION DE CELUI-CI

(30) Priority: 17.07.2017 US 201762533209 P
(43) Date of publication of application: 27.05.2020
(73) Proprietor: ICL Europe Cooperatief U.A., 1062 KR Amsterdam (NL)
(72) Inventor: LATI, Joseph, 85338 Lehavim (IL); ABU RABEAH, Khalil, 84106 Beersheba (IL); SOCOLOVSKY, Ruben, Beersheba (IL); ALHOWASHLA, Ayoub, Hora (IL); GEINIK, Natalia, 8905303 Arad (IL); LEVY, Yacov, Dimona (IL); MAVHUNGA, Nizbert, Redcar TS10 4SH (GB); COHEN, Ofir, 8903238 Arad (IL)
(74) Representative: Maslanka Kubik, Dorota Irena
(86) International application number: PCT/IL2018/050788
(87) International publication number: WO 2019/016804

(56) References cited:
- EP-A1- 2 840 074
- WO-A1-2007/071175
- WO-A1-2007/071175
- WO-A1-2015/185907
- DE-A1-102009 041 456
- US-A- 2 136 996
- ALBADARIN AHMAD B ET AL: "Granulated polyhalite fertilizer caking propensity", POWDER TECHNOLOGY, vol. 308, 8 December 2016 (2016-12-08), pages 193-199, XP029890407, ISSN: 0032-5910, DOI: 10.1016/J.POWTEC.2016.12.004
- ALBADARIN, AHMAD B. et al.: "Granulated polyhalite fertilizer caking propensity", Powder Technology, vol. 308 8 December 2016 (2016-12-08), pages 193-199, XP029890407, Retrieved from the Internet: URL:https://doi.org/10.1016/j.powtec.2016. 12.004
- Icl: "PRODUCT SPECIFICATION ICL POTASHPLUS 37% -EC Fertiliser Particle size distribution Mesh Size (mm) Typical Retained Range Reagent Addition Coating Oils Added", , 15 February 2017 (2017-02-15), pages 1-1, XP093034595, Retrieved from the Internet: URL:https://polysulphate.com/uploads/Docum ents/specification/potashplus-37-specifica tion.pdf [retrieved on 2023-03-24]
- Icl: "ICL PotashpluS Safety data sheet", , 24 July 2016 (2016-07-24), pages 1-7, XP093034605, Retrieved from the Internet: URL:https://www.diamondfertilisers.co.uk/a pp/download/11123283/PotashpluS_CPL_Safety %20Data%20Sheet.pdf [retrieved on 2023-03-24]

## Description

### Field of the Invention

The present invention relates to the field of fertilizers, specifically to production of Polyhalite with high K₂O granules to act as a fertilizer .

### Background of the Invention

To grow properly, plants need nutrients (nitrogen, potassium, calcium, zinc, magnesium, iron, manganese, etc.) which normally can be found in the soil. Sometimes fertilizers are needed to achieve a desired plant growth as these can enhance the growth of plants.

This growth of plants is met in two ways, the traditional one being additives that provide nutrients. The second mode by which some fertilizers act is to enhance the effectiveness of the soil by modifying its water retention and aeration. Fertilizers typically provide, in varying proportions, three main macronutrients:
Nitrogen (N): leaf growth;
Phosphorus (P): Development of roots, flowers, seeds, fruit;
Potassium (K): Strong stem growth, movement of water in plants, promotion of flowering and fruiting;
three secondary macronutrients: calcium (Ca), magnesium (Mg), and sulphur (S);
micronutrients: copper (Cu), iron (Fe), manganese (Mn), molybdenum (Mo), zinc (Zn), boron (B), and of occasional significance there are silicon (Si), cobalt (Co), and vanadium (V) plus rare mineral catalysts.

The most reliable and effective way to make the availability of nutrients coincide with plant requirements is by controlling their release into the soil solution, using slow release or controlled release fertilizers.

Both slow release fertilizers (SRF) and controlled release fertilizers (CRF) supply nutrients gradually. Yet, slow release fertilizers and controlled release fertilizers differ in many ways: The technology they use, the release mechanism, longevity, release controlling factors and more.

Solid fertilizers include granules, prills, crystals and powders. A prilled fertilizer is a type of granular fertilizer that is nearly spherical made by solidifying free-falling droplets in air or a fluid medium. Most controlled-release fertilizers (CRFs) used in commercial nurseries are prilled fertilizers that have been coated with sulfur or a polymer. These products have been developed to allow a slow release of nutrients into the root zone throughout crop development.

Polyhalite is an evaporite mineral, a hydrated sulfate of potassium, calcium and magnesium with formula: K₂Ca₂Mg(SO₄)₄·2H₂O. Polyhalite is used as a fertilizer since it contains four important nutrients and is low in chloride:
48% SO₃ as Sulfate
14% K₂O as from Sulfate of Potash
6% MgO as from Magnesium Sulfate
17% CaO as from Calcium Sulfate

Potash refers to potassium compounds and potassium-bearing materials, the most common being potassium chloride (KCl). Potassium is the third major plant and crop nutrient after nitrogen and phosphorus. It has been used since antiquity as a soil fertilizer (about 90% of current use). Elemental potassium does not occur in nature because it reacts violently with water. As part of various compounds, potassium makes up about 2.6% of the weight of the Earth's crust and is the seventh most abundant element, similar in abundance to sodium at approximately 1.8% of the crust. Potash is important for agriculture because it improves water retention, yield, nutrient value, taste, color, texture and disease resistance of food crops. It has wide application to fruit and vegetables, rice, wheat and other grains, sugar, corn, soybeans, palm oil and cotton, all of which benefit from the nutrient's quality enhancing property.

Polyhalite is a desirable evaporite which is often used as a fertilizer.

WO2015185907 teaches of a coated seed product, the product comprising: at least one plant seed; and a coating adhered to the exterior of the plant seed, the coating comprising one or more evaporite minerals, preferably polyhalite.

WO2015185906 discloses a fertilizer product in the form of pellets comprising: at least 80% by mass of an evaporite mineral powder having a mean grain size in the range from 50 to 400 pm; and a binder; the pellets having a compression strength greater than 2 kgf. A coated seed product comprising at least one plant seed and a coating adhered to the exterior of the plant seed, comprising an evaporite material.

WO2015185909 teaches of a method for forming a pelletised evaporite mineral product, the method comprising: pulverising an evaporite mineral feedstock to form a dry powder; mixing the dry powder with a binder in the presence of a liquid to form an intermediate blend; and processing the intermediate blend using a pelletiser to form pellets principally composed of the evaporite mineral.

WO2016051130 discloses A method for manufacturing a pelletised mineral product, the method comprising :in a first mixing step, forming a first mixture by mixing the evaporite mineral with non- gelatinised starch under conditions that are insufficient to substantially gelatinise the starch;in a second mixing step, forming a second mixture by mixing the first mixture under conditions that are sufficient to substantially gelatinise the starch comprised within the first mixture; and forming the second mixture into pellets.

WO2017081470 teaches of A fertiliser pellet comprising: a first region of a nitrogen-providing fertiliser composition; and a second region adhered to the exterior of the first region, the second region comprising a fertiliser composition capable of providing (a) two or more alkali metal and/or alkaline earth metal nutrients and (b) sulphur. Further fertilizer compositions comprising potash and a binder are disclosed in WO 2007/071175 A1.

### Summary of the Invention

The present invention relates to a granule of polyhalite and potash, according to claim 1, and to a process for producing such granules, according to claim 3.

Herein described is a process for the granulation of Polyhalite (also know as Polysulphate) and Potash (also referred to herein as "Potash Plus").

The combination of polyhalite and potash may provide superior characteristics, including for example, a sustained and/or controlled released of the fertilizer to the ground, for example, due to the substantially similar size and/or diameter of the granules.

The use of a combined mixture of polyhalite and potash in the form of granules may also be beneficial to prevent the segregation of the combined mixture of polyhalite and potash in a powder mix. Segregation often occurs due to differences in the size or density of the component of the mix. Normally, the smaller and/or denser particles tend to concentrate at the base of the container with the larger and/or less dense ones on the top. An ideal granulation will contain all the Potash Plus of the mix in a correct proportion in each granule and segregation of granules will not occur.

It is difficult to cause the adherence of polyhalite and potash for example, due to lack of plasticity of potash salts. Accordingly, potash salts have a low tendency to granulate as a potash or as a mixture with other salts.

### Detailed Description of the Invention

Herein described is a process for the granulation of a combined mixture of polyhalite and related derivatives and potash.

Granules of the combined mixture of polyhalite and potash may provide superior characteristics, including for example, a sustained and/or controlled released of the fertilizer to the ground, for example, due to the substantially similar size and/or diameter of the granules.

The use of the combined mixture of polyhalite and potash in the form of granules may also be beneficial to prevent the segregation of the combined mixture of polyhalite and potash in a powder mix. Segregation often occurs due to differences in the size or density of the component of the mix. Normally, the smaller and/or denser particles tend to concentrate at the base of the container with the larger and/or less dense ones on the top. An ideal granulation will contain all the Potash Plus of the mix in a correct proportion in each granule and segregation of granules will not occur.

According to some demonstrative embodiments, the granules of the combined mixture of polyhalite and potash may be produced from fine material, e.g., powder, having a Particle Size Distribution (PSD) which is too small to be used by other conventional methods, e.g., bulk blending. According to these embodiments According to some embodiments, the granules may be produced from a mixture of Polyhalite and Potash dust, wherein the Potash dust may comprise particles in any size under 0.5 mm, preferably between 0.001-0.5 mm.

According to other embodiments of the invention, the granules of the present invention may be produced from a mixture of Polyhalite and Potash particles in a standard size, i.e., from 0.5 mm to 2 mm.

The combined mixture of polyhalite and potash granules of the present invention have a spherical shape and optionally may be blended with other nutrients (via for example bulk blending) may provide a more homogenous composition, the granules may also possess a low tendency of segregation, the granules may also exhibit low tendency to brake into small particles, the granules may also exhibit easy dissolution velocity, the granules may be easily coated and exhibit a low tendency to produce dust, thus diminishing environmental pollution (no dust liberation).

According to some demonstrative embodiments, the granule of the present invention may also include one or more micronutrients selected from the group including: copper (Cu), iron (Fe), manganese (Mn), molybdenum (Mo), zinc (Zn), boron (B), silicon (Si), cobalt (Co), and vanadium (V).

Described herein is a process for mixing Potash with Polyhalite, wherein the process may preferably include granulation of 50% w/w standard Potash and 50%w/w Polyhalite.

According to the invention, the binder, as referred to herein, is a geopolymer, potassium silicate, sugar or starch, being a suitable material or compound that may mechanically and/or chemically hold or draw other materials together to form a cohesive whole. The compositions may further comprise other organic or inorganic binders, such as, bentonite, Lignosulfonates, molasses, hydrated lime, bitumen, Portland cement, clay, acids (Nitric, Hydrochloric, Phosphoric, Sulphuric), Cellulose Gum, HD-50R , Water Glass (Na₂SIO₃), Cements, Fly Ash, volcanic ash wood ash, Sodium Silicate, MgO, CaO, Alganite, PEG ,Fly Ash, Pozzolanic additive , Kaolinite 'Meta Kaolin, Oils and Waxesand the like, or a combination thereof.

According to some demonstrative embodiments, the binder is preferably a geo-polymer, and most preferably a pseudo geo-polymer, i.e., a substance exhibiting geo-polymer like properties as a binder.

In principle The basic pozzolanic reaction occurs between calcium hydroxide, portlandite (Ca(OH)₂), and other Silicate compound

Ca(OH)₂ + X₂SiO₃→ CaX₂SiO₄ ·1 H₂O

X= K, Na ,H ,Mg

According to some embodiments, the specific use of geo-polymers as binders provides a superior effect for the unique combination of Polyhalite and Potash due to their non-binding characteristics.

According to the invention, the binder is added in a concentration of 2% w/w.

According to some demonstrative embodiments, the addition of a binder to the process improves the granulation process, enhances the strength of the resulting granules and diminishes the abrasion of the final product, e.g., when the final resulting product is transported. According to some embodiments, the resulting product may have a low abrasion level. According to some embodiments, the granules of the present invention may be coated with various coating materials, e.g., for anti-dusting and anticaking purposes, slow release and for the addition of microelements and/or macro-elements

The granulation process is according to claim 3.

According to some demonstrative embodiments, the granulation process may include the following steps:
Mixing Potash with Polyhalite, with a binder and optionally additives may be added at this stage as well;
The mixture may be handled at a temperature between 20-180 °C,
Mixing a binder, for example, in a concentration of between 0.5-20% of the feed weight, preferably 5%, with water for example, in a concentration of between 3-10% of the feed weight, preferably 6%, in a separate vessel, to provide for a binder-water mix;
Adding the binder-water mix to the mixer including the Potash Plus and mixing for 5-15 minutes;
Adding 0.5-10% water without stopping the mixer and mixing for at least two more minutes;
Discharging the material from the mixer
Drying the material at 150-180 degrees in fluid bed or drum dryer; and
Screening the material to receive granules ranging in size between 1-6 mm

The resulting Polyhalite and Potash granules include the following properties:
Potash in a concentration of 49% w/w.

Polyhalite in a concentration of 49% w/w.

Binder in a concentration of 2% w/w.

The size of each granule is 1-6 mm.

The strength of the granules may be at least 0.7 kg\granule after exposure to humidity.

According to some embodiments, as described in detail below, antidust compositions may be present in the granule in an amount of 0-5000 ppm. According to some preferred embodiments of the present invention there is provided a granule which contains 49% w/w Kcl and 49% w/w Polyhalite and 2% w/w/ of a binder, the size of the granule is between 2-4 mm and the strength is at least 0.7 kg\granule after exposure to humidity.

According to the invention, the binder is prepared in situ as part of the process.

According to some demonstrative embodiments, the preparation of a binder may be performed in a single step, for example, including mixing a binder base with water.

According to other embodiments of the present invention the in situ preparation of the binder may be performed in two steps.

According to some embodiments, the first step may include an activation step. The activation step may be performed at conditions including high pH (12 or above) and include dissolving alkali hydroxide (for example, KOH, Ca(OH)₂, NaOH) with alumina and/or silica.

According to some embodiments, the second step may include polycondensation, for example, to yield M_{W}((SiO2)_{X}-AlO₂)_{Y}*ZH2O.

According to some embodiments, the first step may include the activation of the alkali hydroxide with only Silica. According to these embodiments, the product would be CaH₂SiO4, whereas the exact product may depend on the proportions among CaO, SiO₂ ,Al₂O₃.

The binder (2% w/w) can be added as a dry powder slurry or totally soluble to the blend of the Polyhalite and Potash.

According to the invention, the binder is prepared in situ.

According to these embodiments, the in-situ preparation of the binder enables for an optimal adherence of the Polyhalite to the Potash.

Preparation of the binder in situ is important since the delay of use of the binder in the process may cause polymerization of the binder, for example, causing diminished results.

According to some embodiments, the in-situ preparation of the binder may include creating a binder which may consist of two components, A first component may be a Pozzolanic additive, for example, Fly ash, Metakolin, Kolin, Feldspar 'silicate solid material and the like and a second component may include an aqueos base, for example Ca (OH)₂, KOH, NaOH and the like. According to some embodiments, the aqueous base may cause the activation of the pozzolanic additive and create a Geopolymer material or a geopolymer like material, to act as the binder and/or as an adhesive material for the process of the present invention.

According to some embodiments, the binder preparation step which may be performed in situ, may yield the following binder CaH₂SiO₄·2H₂O , MW((SiO₂)X-AlO₂)Y*ZH₂O

The process includes the preparation of a binder in which at least one binder is prepared, in situ.

According to some embodiments, the binder preparation may include the addition of water.

According to some embodiments, the binder may be added to a pre-mixer to undergo first granulation with a feed of polyhalite and Potash. The feed includes a mix of polyhalite and potash, e.g., standard Poatsh particles and/or Potash dust. According to some embodiments, the blend of the Polyhalite and Potash can be mixed using any suitable mixer known in the art, for example, using a high speed mixer or high speed Eirich.

The binder is thoroughly mixed with feed to provide for a combined mixture.

According to some embodiments, the combined mixture may form a granule core (also referred to herein as "first granulation" and/or "pre-granulation".

According to some embodiments, the granulation cores may facilitate and/or expedite the granule formation process.

The combined mixture, having undergone a step of first granulation may be transferred to a granulator and be granulated. According to some embodiments, the granulation process may be conducted using various machines like a pan granulator ,Drum, a Plough shear mixer and/or granulator and the like.

According to some embodiments, the granules formed using granulator may optionally undergo a process of classification using a Fluidized bed reactor (also referred to herein as FB classifier), for example, to separate fine particles from desired size granules, and optionally return the fine particles back to granulator for further granulation.

The granules undergo a process of drying, preferably using dryer, e.g., to remove any residual moisture or water from the granule and yield dry granules. According to some embodiments, the dryer may include any suitable machinery that may cause the evaporation of water, including, for example, fluidized bed , Rotary Dryer Rolling Bed Dryer and the like.

According to some embodiments, during the process of drying dust may be formed, e.g., polyhalite and/or potash dust. The dust that is formed may be transferred back to feed to be re-used in the process.

The granules go through a screener to be sieved to a desired granule size being 1-6 mm, most preferably 2-4 mm.

According to some embodiments, granules or particles which have a size which is smaller than the desired size granule may be classified as undersized particles (Also referred to herein as "US").

According to some embodiments, US may be transferred back to feed to be re-used in the process.

According to some embodiments, granules or particles which have a size which is greater than the desired size granule may be classified as oversized particles (Also referred to herein as "OS"). The crushed material may be recycled back into the screener, the US may be returned to the feed and the OS may be returned to crusher.

According to some embodiments, the crushed particles leaving crusher may be transferred to screener for additional sieving. Any undersized particles (US) may be returned to feed and Oversized particles OS may be returned to crusher.

According to some embodiments, desired size granules yielded via screener may undergo a process of product glazing.

According to some embodiments, to the resulting product antidust compounds may be added in step, e.g., to reduce the formation of dust when the product is conveyed.

### Reference Examples (not according to the invention)

### Example-1

Polyhalite +Potash 3000 Gr
Mixer velocity: 4000 rpm
Residence time 2 - 10 min,
1- Fill the mixer and mix one minute and stop.
2- Mix the binder (5% of the feed weight) with the water (10% of the feed weight) in a small vessel (the mix).
3- Add the mix (binder + KCl + Poly) to the mixer and start mixing during 5 minutes at 4000 rpm.
4- Add water to the mixer in an amount equal to 20 % of the feed weight without stopping Mix the granules for 1 minute at 500 rpm.
5-Continue to mixing two additional minutes
6-Discharge the material
7- Dry the material at 120 degrees five minutes.
8- Screen the material 1.4 mm to 4.75 mm .
9 . The yield 76% -825.

### Example 2

As Example 1
Polyhalite +Potash 15-20 Kg ,Binder-Fly Ash 3-5 %, water ,Water 7-11% ,
Granulation time 11-15 minutes , Yield 65-60% .

### Example 3

As Example 1 Binder 2-4% Fly Ash 0.4-0.8 Ca(OH)₂ . Yield 40-35%

### Example 4

3000gr of Polyhalite+Potash mixed for 2.5 minutes in Eirich at 4000 rpm .5 5% of Fly Ash and 11% of water added and mixed again for 5 minutes at 4000 rpm .
Granulation- 1 minute. the speed of the Eirich reduce to 500 rpm and 17% of water added and the . The yield was 70-80% and the strength 0.8
Kg\granule

### Example 5

The process disclosed in this example is a continuous process.
8.17 Kg\hr of KCl, 6.01 kg\hr of Polyhalite are mixed in Pugmill for 30-60 seconds. After transferring the mixture to a drum granulator 1.22 kg/hr of HD-50R
solution (the binder) are added and 1.1 kg\hr of Water are added., The bed temperature 330 degrees Celsius for rotational speed 18 rpm. Granulation time 1-2 minutes. The product discharged from dryer at 94⁰ degrees.

The PSD of the product was 99% between 4mm to 1.7 mm.

SGN 287mm, average granular strength between 2.36mm - 2.8mm and strength is 2.41 kg\granule.

### Example 6

As example 5
8.13 kg\hr of KCl, 6.24 kg\hr of polyhalite and 0.46 kg\hr of starch were mixed for 30-60 seconds in pugmill. After transferring to drum granulator 1.02 kg\hr of Potassium silicate solution (the binder) were added and 2.8 kg\hr of water was added., Bed temperature 350 degree, Rotational speed 14 rpm. Granulation time 1-2 minutes Material discharge from dryer at 85⁰ degrees.

The PSD of the product 99.5% between 1.7mm to 4mm. The SGN 2.72mm and the average strength of the granules 2.97 Kg\granule.

## Claims

1. A granule of polyhalite and potash comprising:
(i) potash in a concentration of 49%
(ii) polyhalite in a concentration of 49% w/w; and
(iii) a binder in a concentration of 2% w/w, wherein said binder is a geopolymer, potassium silicate, sugar or starch;
wherein the size of said granule is 1-6 mm; and
wherein said granules have a spherical shape.

2. The granule of claim 1, wherein the strength of said granule is at least 0.7 kg\granule.

3. A process for the production of granules comprising polyhalite and potash, comprising
(i) preparing a binder in situ;
(ii) mixing said binder with a feed of polyhalite and potash mix to yield a combined mixture;
(iii) granulating said combined mixture to yield granules;
(iv) drying said granules; and
(v) screening said granules to yield polyhalite and potash granules in a size of between 1-6 mm;
wherein the potash is in a concentration of 49% w/w, the polyhalite is in a concentration of 49% w/w and the binder is in a concentration of 2% w/w; wherein said binder is a geopolymer, potassium silicate, sugar or starch.

4. The process of claim 3, further comprising product glazing.

5. The process of claim 3, wherein granules which are smaller than the desired size granules are returned back to said feed of polyhalite and potash mix.

6. The process of claim 3, wherein granules which are greater than the desired size granules undergo a process of crushing.

## Patentansprüche

1. Granulat aus Polyhalit und Pottasche, umfassend:
(i) Pottasche in einer Konzentration von 49 Gew.-%;
(ii) Polyhalit in einer Konzentration von 49 Gew.-%; und
(iii) ein Bindemittel in einer Konzentration von 2 Gew.-%, wobei das Bindemittel ein Geopolymer, Kaliumsilikat, Zucker oder Stärke ist;
wobei die Größe des Granulats 1-6 mm beträgt; und
wobei die Granulate eine Kugelform aufweisen.

2. Granulat nach Anspruch 1, wobei die Stärke des Granulats mindestens 0,7 kg/Granulat beträgt.

3. Verfahren zur Herstellung von Granulaten, die Polyhalit und Pottasche umfassen, umfassend
(i) Herstellen eines Bindemittels vor Ort;
(ii) Mischen des Bindemittels mit einer Einspeisung eines Polyhalit- und Pottaschegemisches, um ein kombiniertes Gemisch zu erhalten;
(iii) Granulieren des kombinierten Gemisches, um Granulate zu erhalten;
(iv) Trocknen der Granulate; und
(v) Sieben der Granulate, um Polyhalit- und Pottaschegranulate in einer Größe von 1-6 mm zu erhalten;
wobei die Pottasche in einer Konzentration von 49 Gew.-% vorliegt, das Polyhalit in einer Konzentration von 49 Gew.-% vorliegt und das Bindemittel in einer Konzentration von 2 Gew.-% vorliegt; wobei das Bindemittel ein Geopolymer, Kaliumsilikat, Zucker oder Stärke ist.

4. Verfahren nach Anspruch 3, ferner umfassend Glasieren des Produkts.

5. Verfahren nach Anspruch 3, wobei Granulate, die kleiner sind als die Granulate der gewünschten Größe, der Einspeisung des Polyhalit- und Pottaschegemisches zurückgeführt werden.

6. Verfahren nach Anspruch 3, wobei Granulate, die größer sind als die Granulate der gewünschten Größe, einem Zerkleinerungsverfahren unterzogen werden.

## Revendications

1. Granulé de polyhalite et de potasse comprenant :
(i) de la potasse à une concentration de 49 % p/p ;
(ii) de la polyhalite à une concentration de 49 % p/p ; et
(iii) un liant à une concentration de 2 % en poids, ledit liant étant un géopolymère, du silicate de potassium, du sucre ou de l'amidon ;
la taille dudit granulé étant de 1 à 6 mm ; et
lesdits granulés présentant une forme sphérique.

2. Granulé selon la revendication 1, dans lequel la résistance dudit granulé est d'au moins 0,7 kg\granulé.

3. Procédé destiné à la production de granulés comprenant de la polyhalite et de la potasse, comprenant
(i) la préparation d'un liant in situ ;
(ii) le mélange dudit liant avec une charge de mélange de polyhalite et de potasse pour produire un mélange combiné ;
(iii) la granulation dudit mélange combiné pour produire des granulés ;
(iv) le séchage desdits granulés ; et
(v) le criblage desdits granulés pour produire des granulés de polyhalite et de potasse d'une taille comprise entre 1 et 6 mm ;
la potasse étant présente à une concentration de 49 % p/p, la polyhalite étant présente à une concentration de 49 % p/p et le liant étant présent à une concentration de 2 % p/p ; ledit liant étant un géopolymère, du silicate de potassium, du sucre ou de l'amidon.

4. Procédé selon la revendication 3, comprenant en outre l'enduction du produit.

5. Procédé selon la revendication 3, dans lequel les granulés qui sont plus petits que les granulés de la taille souhaitée sont renvoyés dans ladite charge de mélange de polyhalite et de potasse.

6. Procédé selon la revendication 3, dans lequel les granulés qui sont plus gros que les granulés de la taille souhaitée subissent un processus d'écrasement.
